# EUROPEAN PATENT SPECIFICATION

(11) **EP 2 495 919 B1**
(45) Date of publication and mention of the grant of the patent: **25.10.2017**
(21) Application number: 09846084.3
(22) Date of filing: 25.12.2009
(51) Int. Cl.: H04L 12/58, H04W 4/12, H04L 29/08, G06Q 10/10

(54) **METHOD AND SYSTEM FOR IMPLEMENTING TIME PROCESSING OF MESSAGE**
VERFAHREN UND SYSTEM ZUR IMPLEMENTIERUNG VON ZEITVERARBEITUNG VON NACHRICHTEN
PROCÉDÉ ET SYSTÈME DE MISE EN UVRE D'UN TRAITEMENT DE L'HEURE DES MESSAGES

(30) Priority: 30.10.2009 CN 200910110448
(43) Date of publication of application: 05.09.2012
(73) Proprietor: ZTE Corporation, Shenzhen, Guangdong 518057 (CN)
(72) Inventor: ZHOU, Yejuan, Shenzhen Guangdong 518057 (CN); YE, Bing, Shenzhen Guangdong 518057 (CN); ZHONG, Jian, Shenzhen Guangdong 518057 (CN)
(74) Representative: V.O.
(86) International application number: PCT/CN2009/076078
(87) International publication number: WO 2010/145170

(56) References cited:
- EP-A1- 2 003 906
- EP-A2- 1 818 739
- CN-A- 1 812 451
- CN-A- 1 812 451
- CN-A- 101 364 892
- CN-K1- 1 949 892
- US-A1- 2004 224 704

## Description

### Field of the Invention

The present invention relates to the field of mobile communication technologies, and in particular to a method and a system for implementing time processing of a message.

### Background of the Invention

A message transmitted from a message center to a receiving terminal carries time information which is used for the receiving terminal to recognize when the message is transmitted from a transmitting terminal.

According to a Global System for Mobile Communication (GSM) protocol, the time information carried in the message comprises: message center time and time zone identifier. If the receiving terminal supports a time zone function, after receiving the message, the receiving terminal would analyze the time as the time based on the current time zone of the receiving terminal itself and then display the time.

According to a Code Division Multiple Access (CDMA) protocol, the time information carried in the message has no associated time zone identifier, only indicating that the time is based on Universal Time Coordinated (UTC). In a new version of CDMA protocol, it is indicated that the time is based on UTC or based on user time. However, during implementation, the time information generally is based on a Local time of the message center.

When the receiving terminal and the message center are located in different time zones, or when the receiving terminal roams to a different time zone, after the time information based on the time zone of the message center is transmitted to the receiving terminal, the time displayed by the GSM terminal not supporting the time zone function and the CDMA terminal not carrying a time zone identifier may be inaccurate, which would impact the analysis of the message transmitting time for the receiving user; particularly for the message having a close relationship with time, the inaccuracy of time would cause a great influence to the user.

The prior art has taken the problems above into consideration, and the process manners comprise the following points or combination thereof: (1) based on the time zone of the message center; (2) based on the time zone of a home location of the receiving terminal; (3) based on the time zone of a currently visited Mobile Switching Center (MSC) of the receiving terminal.

The defects of the prior art lie in that: when the transmitting time of the message is filled in the message, it is the message center that determines the time is based on the time zone of the message center, or the time zone of the home location of the receiving terminal, or the time zone of the visited MSC of the receiving terminal.

Therefore, after the message is delivered to the receiving terminal, the receiving terminal still can not determine which time zone the time is based on, there still exists a time zone confusion phenomenon, besides, the display modes of all receiving terminals are the same, thus it is inconvenient for a user to perform a flexible modification based on his/her actual requirement.

It is noted that patent publication CN 1 949 892 discloses a short message processing method, based on an operator preset time format converting mode. It is further noted that publication US 2004/224704 discloses methods and apparatus for providing consistency in short message service timestamp formatting for mobile communication devices and that EP 2 003 906 discloses a method for realizing a multimedia message signature service.

### Summary of the invention

The present invention provides a method and a system for implementing time processing of a message, so as to avoid a confusion of the message time for a user and ensure a better deployment of user message services.

The technical solution of the present invention is realized as follows.

The present invention provides a method for implementing time processing of a message according to claim 1.

The method may further comprise the steps of:
receiving information for customization of the user; and
obtaining the mode customized by the user according to the information for customization of the user.

The method may further comprise the steps of:
receiving information for modifying customization of the user; and
obtaining a customized mode modified by the user according to the information for modifying customization of the user.

The method may further comprise the steps of:
receiving information for canceling customization of the user; and
canceling the mode customized by the user according to the information for canceling customization of the user.

The method may further comprise a step of:
making the information for customization of the user one part of account information of the user.

The method may further comprise a step of:
making the time conversion a value-added service of the user.

The mode customized by the user may comprise: based on Universal Time Coordinated (UTC), based on Local time of a message center, based on time of an account-opening location of the user or based on time of a visited Mobile Switching Center (MSC) of the user.

The present invention also provides a system for implementing time processing of a message according to claim 8.

The message time processing system may be integrated into a value-added service platform, or the message time processing system may be integrated with the message center processing system.

The message time processing system may further be configured to receive information for customization of the user and obtain the mode customized by the user according to the information for customization of the user.

The message time processing system may further be configured to receive information for modifying customization of the user and obtain a customized mode modified by the user according to the information for modifying customization of the user.

The message time processing system may further be configured to receive information for canceling customization of the user and cancel the mode customized by the user according to the information for canceling customization of the user.

The message time processing system may further be configured to synchronize the information for customization of the user, or the information for modifying customization of the user or the information for canceling customization of the user to the message center processing system.

In virtue of the method and the system for implementing time processing of a message provided in the present invention, the time information in the message can be processed according to a mode customized by the user, so as to enable the message to be displayed in a manner of flexible time format based on the actual requirements of a user terminal, avoid a confusion of the message time for the user and ensure a better deployment of user message services.

### Brief Description of the Drawings

Fig. 1 shows a schematic diagram of a system architecture applied in an embodiment of the present invention;
Fig. 2 shows a schematic diagram of another system architecture applied in an embodiment of the present invention;
Fig. 3 shows a schematic diagram of a third system architecture applied in an embodiment of the present invention;
Fig. 4 shows a message flowchart in accordance with an embodiment of the present invention;
Fig. 5 shows a schematic diagram of the principle of converting time according to a user specified format in accordance with an embodiment of the present invention; and
Fig. 6 shows a schematic diagram of the principle of flexibly setting a time format by a user according to requirements in accordance with an embodiment of the present invention.

### Detailed Description of the Embodiments

The implementation of the present invention is further illustrated below in detail in conjunction with accompanying drawings. In order to avoid a confusion of the message time for a user and ensure a better deployment of user message services, the embodiments of the present invention provide a system for processing time of a message, comprising: a message center processing system and a message time processing system.

The message center processing system stores and forwards a message. In addition, the message center processing system records message time and a corresponding time zone, requests and records an address of an MSC to which the message is delivered, delivers the message carrying the information above to the message time processing system, receives the message subjected to the time processing performed by the message time processing system and then delivers this message.

The process whether the message center processing system delivers the message to the message time processing system needs to be determined according to a configuration and a service activation condition of a receiving terminal.

If the message center processing system is configured to adjust time information according to the receiving terminal and it is determined that the receiving terminal has activated the related service, the message center processing system delivers the message to the message time processing system. If it is judged that the message is not required to be delivered to the message time processing system, time is processed according to the default configuration of UTC or Local time format of the message center processing system.

According to a currently configured time display mode of the receiving terminal, the message time processing system matches relevant stored information, performs time conversion for the message and returns the message subjected to time processing to the message center processing system.

The time display mode of the receiving terminal, that is, a time display mode of the user, comprises but not limited to: based on UTC time, based on Local time of the message center, based on time of an account-opening location of the user, or based on time of a visited MSC of the user, etc.

The relevant stored information in the message time processing system comprises: a time zone of the message center processing system, corresponding relationship between the MSC and a time zone, a time zone of the account-opening location of the user, service information for maintaining the time display mode of the user, etc.

The service information for maintaining the time display mode of the user comprises: customization, modification, cancellation, etc., wherein the customization and the cancellation functions enable the user to activate and cancel the service through a terminal or web operation; and the modification function enables the user to modify the time display mode through a terminal or web operation.

Preferably, the customization, modification and cancellation operations of the service (that is, maintaining the time display mode of the user) performed by the user can be synchronized to the message center processing system through a message or a file, so that the message center processing system determines whether it is required to transmit the message to the message time processing system to process.

If the overhead of the message interaction between the message center processing system and the message time processing system is not taken into consideration, the customization, modification and cancellation operations of the related service of the user might not be synchronized to the message center processing system, in this case, only if the message center processing system activates the function of adjusting time information according to the receiving terminal, all messages are required to be transmitted to the message time processing system to process.

Correspondingly, the message time processing method in accordance with an embodiment of the present invention comprises processing as follows.

Through a terminal or a web platform, a user customizes and activates a service function of performing message time processing according to a user-defined mode and sets a corresponding time display mode, for example, based on UTC time, based on Local time of a message center, based on time of an account-opening location of the user, or based on time of a visited MSC of the user, etc.

The message center processing system receives a message, records message time and a corresponding time zone according to a default time display mode, and meanwhile requests and records an MSC address to which the message needs to be delivered.

If the message center processing system is not configured with the service function of performing message time processing according to a user-defined mode of a receiving terminal, or the receiving terminal has not activated the related service, the message center processing system directly delivers the message based on the above time recorded according to the default time display mode; if the receiving terminal is a GSM terminal, the delivered message carries time zone information simultaneously. If it is judged that the message is required to be transmitted to the message time processing system, the message carrying information, such as recorded time, related time zone and visited MSC address, is delivered to the message time processing system.

According to the currently defined time display format of the receiving terminal, the message time processing system searches the stored time zone information of the message center processing system, or the information of a corresponding relationship between MSC and time zone, or time zone information of the account-opening location of the user, performs time conversion for the message and returns the message subjected to time processing to the message center processing system.

The message center processing system delivers the message subjected to time processing to the receiving terminal.

If the overhead of the message interaction between the message center processing system and the message time processing system is not taken into consideration, during implementation, all messages can be transmitted to the message time processing system uniformly, without the previous process of judging whether the user has activated the related service in the message center processing system.

In another implementation, the message time processing system is embedded in a value-added service platform (for example, user value-added service system), the time conversion processing, as a value-added service of a user, is realized and managed by the value-added service platform uniformly.

There is a third implementation, in which, the message time processing system can be embedded in the message center processing system, the configuration of the time display mode of the user can be regarded as one part of the account information of the user and can be directly managed by the message center processing system which performs time conversion according to user requirements.

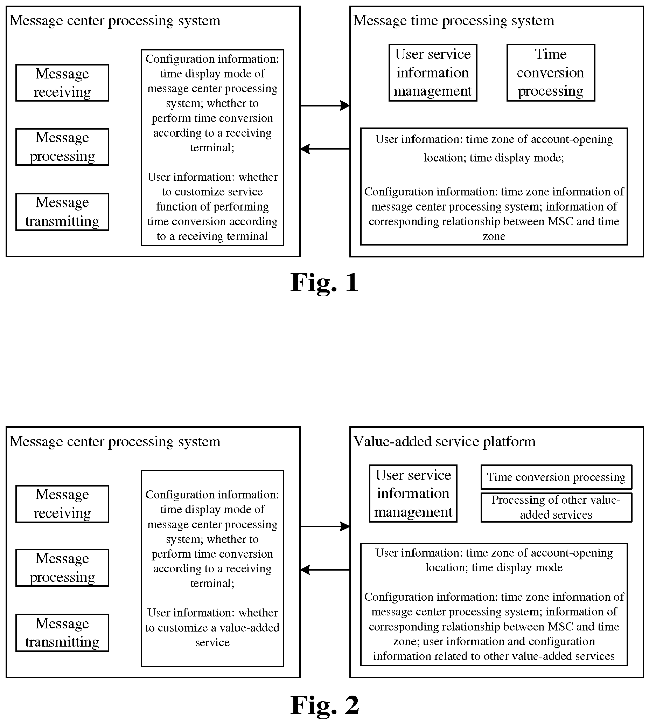

Fig. 1 shows a schematic diagram of a system architecture applied in an embodiment of the present invention. The system comprises a message center processing system and a message time processing system.

The message center processing system receives a message, records message time and a corresponding time zone, requests and records an address of an MSC to which the message is delivered, delivers the message carrying the information above to the message time processing system, receives the message subjected to time processing performed by the message time processing system and then delivers this message.

The process whether the message center processing system delivers the message to the message time processing system is determined according to a system configuration and a service activation condition of a receiving terminal.

If the message center processing system is configured to adjust time information according to the receiving terminal and it is determined that the receiving terminal has activated the related service, the message center processing system delivers the message to the message time processing system. If it is judged that the message is not required to be delivered to the message time processing system, time is processed according to the default configuration of UTC or Local time format of the message center processing system.

The message time processing system performs time conversion for the message according to currently configured time display mode of the receiving terminal and the relevant stored information, and returns the message subjected to time processing to the message center processing system.

The time display mode of the user comprises: based on UTC time, based on Local time of the message center, based on time of an account-opening location of the user, or based on time of a visited MSC of the terminal, etc.

The relevant stored information comprises: stored time zone information of the message center processing system, stored information of a corresponding relationship between the MSC and a time zone, stored time zone information of the account-opening location of the user, service information for maintaining the time display mode of the user, etc.

The service information for maintaining the time display mode of the user comprises: customization, modification and cancellation, wherein the customization and the cancellation functions enable the user to activate and cancel the service through a terminal or web operation; and the modification function enables the user to modify the time display mode through a terminal or web operation.

The customization, modification and cancellation operations of the service performed by the user can be synchronized to the message center processing system through a message or a file, so that the message center processing system determines whether it is required to transmit the message to the message time processing system to process.

The synchronization information does not need to comprise specific details of the service. The message center processing system only needs to concern whether the user has activated or canceled the service.

If the overhead of the message interaction between the message center processing system and the message time processing system is not taken into consideration, during implementation, all messages can be transmitted to the message time processing system uniformly, without the previous process of judging whether the user has activated the related service in the message center processing system, also without synchronizing the service information of the user between the message center processing system and the message time processing system.

Fig. 2 shows a schematic diagram of another system architecture applied in an embodiment of the present invention. In this implementation, the time conversion processing, as a value-added service of a user, is uniformly realized and managed by the value-added service platform.

The implementation logic is basically consistent with that in Fig. 1, with a slight difference, wherein the difference lies in that: when the message center processing system forwards the message to the value-added service platform, the message center processing system can determine only whether the user has a value-added service without determining the specific service.

Such process can be realized by modifying and expanding the existing value-added service platform, which is convenient to implement.

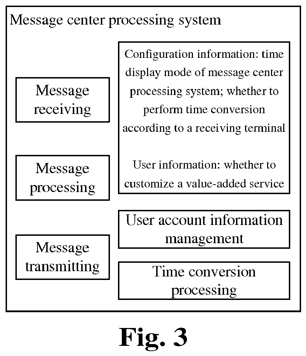

Fig. 3 shows a schematic diagram of a third system architecture applied in an embodiment of the present invention. In this implementation, the message time processing system is embedded in the message center processing system directly.

The configuration of the time display mode of the user, which is regarded as one part of the account information of the user, is directly managed by the message center processing system which performs time conversion according to user requirements.

The account information of the user further comprises time zone information of the account-opening location.

The message center processing system further needs to store: whether to initiate the function of performing time conversion according to the configuration of the user; and a corresponding relationship between an MSC address and the time zone.

The principle of time conversion is consistent with the above.

Such process can be applied to the conditions of no value-added service platform and not planning to add other equipment, which is convenient to implement.

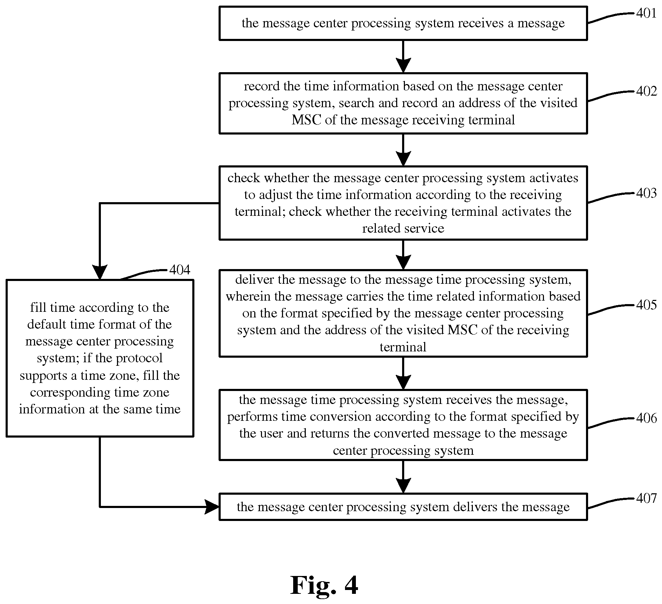

Fig. 4 shows a message flowchart in accordance with an embodiment of the present invention. The flow comprises steps as follows.

Step 401: a message center processing system receives a message.

Step 402: the message center processing system records the message time and a corresponding time zone according to a default time display mode of the system, and meanwhile requests and records an MSC address to which the message is transmitted.

That is, the message center processing system records the time information based on the message center processing system, searches and records the address of the visited MSC of the message receiving terminal.

The default time display mode of the system can be configured as the OTC time or the Local time of the message center processing system.

Step 403: it is checked whether the message center processing system activates the function of adjusting the time information according to the receiving terminal and whether the receiving terminal activates the related service, if yes, execute Step 404; otherwise, execute Step 405.

During implementation, the checking of the service activation condition of the receiving terminal might not be performed, and all messages are delivered to the message time processing system to process.

Step 404: if the system is not configured with the function or the user of the receiving terminal has not activated the service, the time is filled according to the default time display mode of the message center processing system; if the protocol supports a time zone, the corresponding time zone information is filled at the same time, then go to Step 407.

Step 405: the message is delivered to a message time processing system, wherein the message carries time and time zone information based on the format specified by the message center processing system and the address of the visited MSC of the receiving terminal.

Step 406: the message time processing system receives the message, converts the time according to the format specified by the user and returns the converted message to the message center processing system.

Step 407: the message center processing system delivers the message.

Particularly, when the message time processing system is embedded in a value-added service platform system, the interaction between the message center processing system and the message time processing system becomes the interaction between the message center processing system and the value-added service platform; and when the message time processing system is embedded in the message center processing system, the interaction between the message center processing system and the message time processing system becomes the internal processing of the message center processing system.

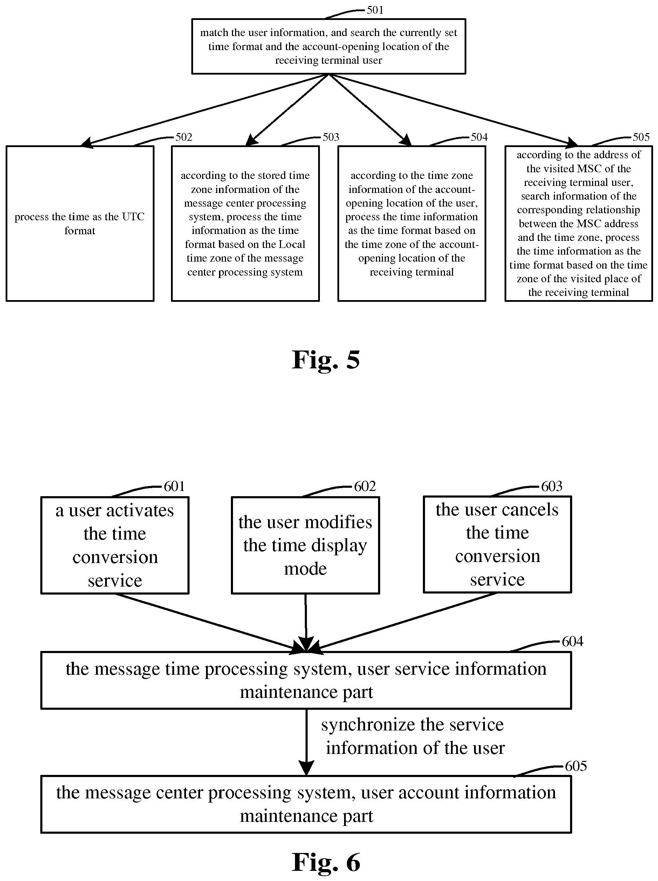

Fig. 5 shows a diagram of the principle of converting time according to a user specified format in accordance with an embodiment of the present invention. The procedure comprises steps as follows.

Step 501: user information of a receiving terminal is read, wherein the user information comprises a time zone of an account-opening location and a currently set time conversion mode. That is, the user information is matched to search for the currently set time format and an account-opening location of the user of the receiving terminal.

Step 502: if it is set to deliver based on the format of the UTC time, the time is directly processed as the UTC format.

Step 503: if it is set to deliver based on the format of the Local time of the message center processing system, the stored time zone information of the message center processing system is searched, and the time information is processed as the time format based on the Local time zone of the message center.

Step 504: if it is set to deliver based on the time format of the account-opening location of the user, according to the time zone information of the account-opening location of the user, time conversion is performed to process the time as the time format based on the time zone of the account-opening location of the receiving terminal.

Step 505: if it is set to deliver based on the time format of the visited place of the user, according to the address of the visited MSC of the receiving terminal user, information of the corresponding relationship between the MSC address and the time zone is searched, and time conversion is performed to process the time as the time format based on the time zone of the visited place of the receiving terminal.

Fig. 6 shows a diagram of the principle of a user flexibly setting a time format according to requirements in accordance with an embodiment of the present invention.

According to the time zone supporting condition of a user terminal, the user sets a time display mode according to requirements. In this way, after a message is transmitted to the terminal, the time will not be wrong or confused for the user.

Provided that the user terminal does not support time analysis based on a time zone, the user originally displays time according to the time zone format of the account-opening location, when the user goes to other places on business, if the user expects to display time according to the time zone format of the visited place, the user can transmit a message by way of a terminal or web to set the message time to be displayed according to the time zone format of the MSC of the visited place. When the user returns to the account-opening location, the user can set to display time according to the time format of the account-opening location again; even if the user dose not modify the setting, since the initial setting of the user is known, after the message is received, the correct time still can be analyzed.

Step 601: when the user needs to activate the service of converting display time according to the setting, the user transmits a message to the message time processing system in a predetermined message format through a terminal or web, to customize the service, wherein the message can carry an initial time conversion format, or, the message time processing system can initialize a reasonable default time conversion format.

Step 602: when the user needs to modify the time display mode, the user transmits a message to the message time processing system in a predetermined message format of the system through a terminal or web, to perform format modification.

Step 603: when the user does not need the service, the user transmits a message to the message time processing system in a predetermined message format through a terminal or web, to perform service cancellation.

Step 604: the message time processing system maintains the service information of the user according to the message from the user.

Step 605: the message time processing system synchronizes the service information to the message center processing system according to requirements.

When the time conversion process is embedded in the message center processing system or a value-added service platform, the principle is the same as the above.

The above are only embodiments of the present invention, it should be noted that for those skilled in the art, various modifications and improvements can be made without departing from the principle of the present invention, these modifications and improvements are deemed to be included within the protection scope of the present invention as defined in the appended claims.

## Claims

1. A method for implementing time processing of a message, comprising the steps of:
a user customizing and activating a service function of performing message time processing according to a mode customized by the user, and configuring a corresponding time display mode, wherein whether to activate the service function of performing message time processing according to the mode customized by the user is stored in a message center processing system;
when determining, by checking whether the message center processing system activates the service function of performing message time processing according to the mode customized by the user, that time information in a received message is required to be processed according to a mode customized by the user, performing time conversion for the message according to the mode customized by the user, wherein the mode customized by the user is the currently configured time display mode of a receiving terminal, the receiving terminal is a Global System for Mobile Communication (GSM) terminal not supporting a time zone function or a Code Division Multiple Access (CDMA) terminal not carrying a time zone identifier; and
delivering (407) the message subjected to the time conversion.

2. The method according to claim 1, **characterized by** further comprising the steps of:
receiving information for customization of the user; and
obtaining (601) the mode customized by the user according to the information for customization of the user.

3. The method according to claim 2, **characterized by** further comprising the steps of:
receiving information for modifying customization of the user; and
obtaining (602) a customized mode modified by the user according to the information for modifying customization of the user.

4. The method according to claim 2, **characterized by** further comprising the steps of:
receiving information for canceling customization of the user; and
canceling (603) the mode customized by the user according to the information for canceling customization of the user.

5. The method according to claim 2, 3 or 4, **characterized by** further comprising a step of:
making the information for customization of the user one part of account information of the user.

6. The method according to claim 1, **characterized by** further comprising a step of:
making the time conversion a value-added service of the user.

7. The method according to claim 1, **characterized in that** the mode customized by the user comprises: based on Universal Time Coordinated (UTC), based on Local time of a message center, based on time of an account-opening location of the user or based on time of a visited Mobile Switching Center (MSC) of the user.

8. A system for implementing time processing of a message, comprising:
a terminal or a web platform, configured for a user to customize and activate a service function of performing message time processing according to a mode customized by the user and configure a corresponding time display mode, wherein whether to activate the service function of performing message time processing according to the mode customized by the user is stored in a message center processing system;
the message center processing system, configured to receive (401) a message, determine, by checking whether the message center processing system activates the service function of performing message time processing according to the mode customized by the user, that time information in the message is required to be processed according to a mode customized by the user and transmit the message subjected to time conversion, wherein the mode customized by the user is the currently configured time display mode of a receiving terminal, the receiving terminal is a Global System for Mobile Communication (GSM) terminal not supporting a time zone function or a Code Division Multiple Access (CDMA) terminal not carrying a time zone identifier; and
a message time processing system, configured to perform (406) the time conversion for the message according to the mode customized by the user.

9. The system according to claim 8, **characterized in that** the message time processing system is integrated into a value-added service platform, or the message time processing system is integrated with the message center processing system.

10. The system according to claim 8, **characterized in that** the message time processing system is further configured to receive information for customization of the user and obtain (601) the mode customized by the user according to the information for customization of the user.

11. The system according to claim 8, **characterized in that** the message time processing system is further configured to receive information for modifying customization of the user and obtain (602) a customized mode modified by the user according to the information for modifying customization of the user.

12. The system according to claim 8, **characterized in that** the message time processing system is further configured to receive information for canceling customization of the user and cancel (603) the mode customized by the user according to the information for canceling customization of the user.

13. The system according to claim 10, 11 or 12, **characterized in that** the message time processing system is further configured to synchronize (605) the information for customization of the user, or the information for modifying customization of the user or the information for canceling customization of the user to the message center processing system.

## Patentansprüche

1. Verfahren zur Implementierung von Zeitverarbeitung einer Nachricht, umfassend die Schritte, in denen:
ein Benutzer eine Dienstfunktion der Durchführung von Nachrichtenzeitverarbeitung gemäß einem Modus, angepasst durch den Benutzer, anpasst und aktiviert und einen entsprechenden Zeitanzeigemodus konfiguriert, wobei, ob die Dienstfunktion der Durchführung von Nachrichtenzeitverarbeitung gemäß dem von dem Benutzer angepassten Modus aktiviert wird, in einem zentralen Nachrichtenverarbeitungssystem gespeichert wird;
beim Bestimmen, durch Prüfung, ob das zentrale Nachrichtenverarbeitungssystem die Dienstfunktion der Durchführung von Nachrichtenzeitverarbeitung gemäß dem von dem Benutzer angepassten Modus aktiviert, dass Zeitinformation in einer empfangenen Nachricht gemäß einem von dem Benutzer angepassten Modus verarbeitet werden muss, Durchführung von Zeitkonvertierung für die Nachricht gemäß dem von dem Benutzer angepassten Modus, wobei der von dem Benutzer angepasste Modus der momentan konfigurierte Zeitanzeigemodus eines empfangenden Endgeräts ist, welches empfangende Endgerät ein Global System for Mobile Communication (GSM) Endgerät ist, das keine Zeitzonenfunktion unterstützt, oder ein Code Division Multiple Access (CDMA) Endgerät ist, das keinen Zeitzonenidentifikator trägt; und
die Nachricht, die Zeitkonvertierung unterliegt, geliefert (407) wird.

2. Verfahren nach Anspruch 1, **dadurch gekennzeichnet, dass** es ferner folgende Schritte umfasst:
Empfangen von Information für die Anpassung des Benutzers; und
Erhalten (601) des Modus, angepasst von dem Benutzer gemäß der Information für Anpassung des Benutzers.

3. Verfahren nach Anspruch 2, **dadurch gekennzeichnet, dass** es ferner folgende Schritte umfasst:
Empfangen von Information zum Ändern der Anpassung des Benutzers; und
Erhalten (602) eines angepassten Modus, geändert von dem Benutzer gemäß der Information zum Ändern der Anpassung des Benutzers.

4. Verfahren nach Anspruch 2, **dadurch gekennzeichnet, dass** es ferner folgende Schritte umfasst:
Empfangen von Information zum Abbrechen der Anpassung des Benutzers; und
Abbrechen (603) des Modus, angepasst von dem Benutzer gemäß der Information zum Abbrechen der Anpassung des Benutzers.

5. Verfahren nach Anspruch 2, 3 oder 4, **dadurch gekennzeichnet, dass** es ferner einen Schritt umfasst, um:
die Information zum Anpassen des Benutzers zu einem Teil der Kontoinformation des Benutzers zu machen.

6. Verfahren nach Anspruch 1, **dadurch gekennzeichnet, dass** es ferner einen Schritt umfasst, um:
die Zeitkonvertierung zu einem Mehrwertdienst für den Benutzer zu machen.

7. Verfahren nach Anspruch 1, **dadurch gekennzeichnet, dass** der vom Benutzer angepasste Modus umfasst: basierend auf koordinierter Weltzeit (engl. Universal Time Coordinated - UTC), basierend auf Ortszeit eines Nachrichtenzentrums, basierend auf Zeit eines Kontoeröffnungsstandorts des Benutzers oder basierend auf Zeit einer besuchten Vermittlungsstelle im Mobilfunknetz (engl. Mobile Switching Center - MSC) des Benutzers.

8. System zur Implementierung von Zeitverarbeitung einer Nachricht, umfassend:
ein Endgerät oder eine Webplattform, konfiguriert für einen Benutzer zur Anpassung und Aktivierung einer Dienstfunktion der Durchführung von Nachrichtenzeitverarbeitung gemäß einem vom Benutzer angepassten Modus und Konfiguration eines entsprechenden Zeitanzeigemodus, wobei, ob die Dienstfunktion der Durchführung von Nachrichtenzeitverarbeitung gemäß dem vom Benutzer angepassten Modus aktiviert wird, in einem zentralen Nachrichtenverarbeitungssystem gespeichert wird;
das zentrale Nachrichtenverarbeitungssystem, konfiguriert zum Empfangen (401) einer Nachricht, Bestimmen, durch Prüfung, ob das zentrale Nachrichtenverarbeitungssystem die Dienstfunktion der Durchführung von Nachrichtenzeitverarbeitung gemäß dem von dem Benutzer angepassten Modus aktiviert, dass Zeitinformation in der empfangenen Nachricht gemäß einem von dem Benutzer angepassten Modus verarbeitet werden muss und die Nachricht, die Zeitkonvertierung unterliegt, zu senden, wobei der von dem Benutzer angepasste Modus der momentan konfigurierte Zeitanzeigemodus eines empfangenden Endgeräts ist, welches empfangende Endgerät ein Global System for Mobile Communication (GSM) Endgerät ist, das keine Zeitzonenfunktion unterstützt, oder ein Code Division Multiple Access (CDMA) Endgerät ist, das keinen Zeitzonenidentifikator trägt; und
ein System zur Zeitverarbeitung von Nachrichten, konfiguriert zum Durchführen (406) der Zeitkonvertierung für die Nachricht gemäß dem vom Benutzer angepassten Modus.

9. System nach Anspruch 8, **dadurch gekennzeichnet, dass** das System zur Zeitverarbeitung von Nachrichten in eine Mehrwert-Dienstplattform integriert ist oder das das System zur Zeitverarbeitung von Nachrichten mit dem zentralen Nachrichtenverarbeitungssystem integriert ist.

10. System nach Anspruch 8, **dadurch gekennzeichnet, dass** das System zur Zeitverarbeitung von Nachrichten ferner konfiguriert ist, um Information zur Anpassung des Benutzers zu empfangen und den Modus zu erhalten (601), den der Benutzer gemäß der Information zur Anpassung des Benutzers angepasst hat.

11. System nach Anspruch 8, **dadurch gekennzeichnet, dass** das System zur Zeitverarbeitung von Nachrichten ferner konfiguriert ist, um Information zur Änderung der Anpassung des Benutzers zu empfangen und einen angepassten Modus zu erhalten (602), den der Benutzer gemäß der Information zur Änderung der Anpassung des Benutzers geändert hat.

12. System nach Anspruch 8, **dadurch gekennzeichnet, dass** das System zur Zeitverarbeitung von Nachrichten ferner konfiguriert ist, um Information zum Abbrechen der Anpassung des Benutzers zu empfangen und den Modus abzubrechen (603), den der Benutzer gemäß der Information zum Abbrechen der Anpassung des Benutzers angepasst hat.

13. System nach Anspruch 10, 11 oder 12, **dadurch gekennzeichnet, dass** das System zur Zeitverarbeitung von Nachrichten ferner konfiguriert ist, um die Information zur Anpassung des Benutzers oder die Information zum Ändern der Anpassung des Benutzers oder die Information zum Abbrechen der Anpassung des Benutzers mit dem zentralen Nachrichtenverarbeitungssystem zu synchronisieren (605).

## Revendications

1. Procédé pour mettre en oeuvre un traitement de temps d'un message, comprenant les étapes de :
un utilisateur personnalisant et activant une fonction de service consistant à effectuer un traitement de temps de message selon un mode personnalisé par l'utilisateur, et configurant un mode d'affichage de temps correspondant, où si activer la fonction de service consistant à effectuer un traitement de temps de message selon le mode personnalisé par l'utilisateur est stocké dans un système de traitement de centre de messages ;
lors de la détermination, en vérifiant si le système de traitement de centre de messages active la fonction de service consistant à effectuer un traitement de temps de message selon le mode personnalisé par l'utilisateur, qu'il est requis que des informations de temps dans un message reçu soient traitées selon un mode personnalisé par l'utilisateur, effectuer une conversion de temps pour le message selon le mode personnalisé par l'utilisateur, où le mode personnalisé par l'utilisateur est le mode d'affichage de temps configuré actuellement d'un terminal récepteur, le terminal récepteur est un terminal de Système mondial de communication mobile (GSM) ne supportant pas une fonction de fuseau horaire ou un terminal d'Accès multiple par répartition en code (CDMA) ne portant pas un identificateur de fuseau horaire ; et
remettre (407) le message soumis à la conversion de temps.

2. Procédé selon la revendication 1, **caractérisé en ce qu'**il comprend en outre les étapes consistant à :
recevoir des informations pour la personnalisation de l'utilisateur ; et
obtenir (601) le mode personnalisé par l'utilisateur selon les informations pour la personnalisation de l'utilisateur.

3. Procédé selon la revendication 2, **caractérisé en ce qu'**il comprend en outre les étapes consistant à :
recevoir des informations pour modifier la personnalisation de l'utilisateur ; et
obtenir (602) un mode personnalisé modifié par l'utilisateur selon les informations pour modifier la personnalisation de l'utilisateur.

4. Procédé selon la revendication 2, **caractérisé en ce qu'**il comprend en outre les étapes consistant à :
recevoir des informations pour annuler la personnalisation de l'utilisateur ; et
annuler (603) le mode personnalisé par l'utilisateur selon les informations pour annuler la personnalisation de l'utilisateur.

5. Procédé selon la revendication 2, 3 ou 4, **caractérisé en ce qu'**il comprend en outre une étape consistant à :
faire des informations pour la personnalisation de l'utilisateur une partie d'informations de compte de l'utilisateur.

6. Procédé selon la revendication 1, **caractérisé en ce qu'**il comprend en outre une étape consistant à :
faire de la conversion de temps un service à valeur ajoutée de l'utilisateur.

7. Procédé selon la revendication 1, **caractérisé en ce que** le mode personnalisé par l'utilisateur comprend : basé sur Temps universel coordonné (UTC), basé sur l'Heure locale d'un centre de messages, basé sur l'heure d'une localisation d'ouverture de compte de l'utilisateur ou basé sur l'heure d'un Centre de commutation mobile (MSC) visité de l'utilisateur.

8. Système pour mettre en oeuvre un traitement de temps d'un message, comprenant :
un terminal ou une plate-forme Web, configuré pour un utilisateur pour personnaliser et activer une fonction de service consistant à effectuer un traitement de temps de message selon un mode personnalisé par l'utilisateur et configurer un mode d'affichage de temps correspondant, où si activer la fonction de service consistant à effectuer un traitement de temps de message selon le mode personnalisé par l'utilisateur est stocké dans un système de traitement de centre de messages ;
le système de traitement de centre de messages, configuré pour recevoir (401) un message, déterminer, en vérifiant si le système de traitement de centre de messages active la fonction de service consistant à effectuer un traitement de temps de message selon le mode personnalisé par l'utilisateur, qu'il est requis que des informations de temps dans le message soient traitées selon un mode personnalisé par l'utilisateur et transmettre le message soumis à une conversion de temps, où le mode personnalisé par l'utilisateur est le mode d'affichage de temps configuré actuellement d'un terminal récepteur, le terminal récepteur est un terminal de Système mondial de communication mobile (GSM) ne supportant pas une fonction de fuseau horaire ou un terminal d'Accès multiple par répartition en code (CDMA) ne portant pas un identificateur de fuseau horaire ; et
un système de traitement de temps de message, configuré pour effectuer (406) la conversion de temps pour le message selon le mode personnalisé par l'utilisateur.

9. Système selon la revendication 8, **caractérisé en ce que** le système de traitement de temps de message est intégré dans une plate-forme de service à valeur ajoutée, ou le système de traitement de temps de message est intégré avec le système de traitement de centre de messages.

10. Système selon la revendication 8, **caractérisé en ce que** le système de traitement de temps de message est en outre configuré pour recevoir des informations pour la personnalisation de l'utilisateur et obtenir (601) le mode personnalisé par l'utilisateur selon les informations pour la personnalisation de l'utilisateur.

11. Système selon la revendication 8, **caractérisé en ce que** le système de traitement de temps de message est en outre configuré pour recevoir des informations pour modifier la personnalisation de l'utilisateur et obtenir (602) un mode personnalisé modifié par l'utilisateur selon les informations pour modifier la personnalisation de l'utilisateur.

12. Système selon la revendication 8, **caractérisé en ce que** le système de traitement de temps de message est en outre configuré pour recevoir des informations pour annuler la personnalisation de l'utilisateur et annuler (603) le mode personnalisé par l'utilisateur selon les informations pour annuler la personnalisation de l'utilisateur.

13. Procédé selon la revendication 10, 11 ou 12, **caractérisé en ce que** le système de traitement de temps de message est en outre configuré pour synchroniser (605) les informations pour la personnalisation de l'utilisateur, ou les informations pour modifier la personnalisation de l'utilisateur ou les informations pour annuler la personnalisation de l'utilisateur au système de traitement de centre de messages.
